(19) Europäisches Patentamt
European Patent Office
Office européen des brevets

(11) Numéro de publication : **0 462 911 A1**

(12) # DEMANDE DE BREVET EUROPEEN

(21) Numéro de dépôt : **91420204.9**

(51) Int. Cl.⁵ : **B65G 47/14**

(22) Date de dépôt : **20.06.91**

(30) Priorité : **21.06.90 FR 9008048**

(43) Date de publication de la demande :
**27.12.91 Bulletin 91/52**

(84) Etats contractants désignés :
**BE CH DE ES FR GB IT LI**

(71) Demandeur : **S.P.C. CONCEPTION S.A.R.L.**
**Les Verrières-De-Joux**
**F-25300 Pontarlier (FR)**

(72) Inventeur : **Vallet, Serge**
**Les Verrières-De-Joux**
**F-25300 Pontarlier (FR)**

(74) Mandataire : **Moinas, Michel**
**Cabinet Michel Moinas 13 Chemin du Levant**
**F-01210 Ferney-Voltaire (FR)**

(54) **Machine trieuse d'objets.**

(57)     La machine trieuse d'objets comprend un support cylindrique vertical (20) solidaire d'une table fixe (10). Une poulie d'entraînement (52) est montée au moyen d'un palier (50) sur la face extérieure latérale du support cylindrique (20), cette poulie (52) supportant une couronne concentrique horizontale tournante (55). le support cylindrique (20) est surmonté d'une bride (27) dont l'ouverture interne est oblique par rapport à la verticale pour maintenir en position inclinée un moteur d'entraînement (60) et/ou un palier (30,32,34) supportant coaxialement un arbre (39) de plateau interne (40). Ce plateau interne rigide tournant (40) est incliné par rapport à la couronne concentrique (55), de façon à mener les objets (1) les uns derrière les autres vers au moins un élément de sélection (14) disposé au-dessus du plateau et/ou de la couronne de manière à recirculer vers ce plateau interne (40) les objets mal orientés

EP 0 462 911 A1

FIG 1

La présente invention est relative à une machine trieuse d'objets qui forme d'abord un courant continu d'objets à partir d'un ensemble disposé en vrac et qui effectue ensuite un tri de ces objets selon leur orientation, c'est-à-dire qu'elle recircule les objets mal orientés pour ne laisser sortir qu'une suite d'objets les uns derrière les autres avec une orientation rigoureusement prédéterminée. De telles machines trieuses sont avantageusement utilisées, par exemple, pour apporter automatiquement des pièces à usiner avec une orientation correcte dans une machine-outil, lesquelles pièces sont normalement reçues en vrac. Ces machines trieuses peuvent également alimenter des machines d'assemblage, de conditionnement, de contrôle ou autres.

Un type de machine trieuse d'objets connu comprend un plateau interne rigide inférieur tournant agencé de telle sorte qu'il amène les objets les uns derrière les autres sur une couronne concentrique horizontale supérieure également tournante. Des éléments de sélection disposés au-dessus du plateau et/ou de la couronne recirculent vers le plateau interne inférieur les objets mal orientés et ne laissent donc sortir que les objets correctement orientés.

L'exposé US 3 882 998 divulgue un premier exemple de ce type de machine dans laquelle le plateau interne est supérieur à la couronne externe et dont l'élément de sélection en forme de cylindre vertical surmonte le plateau interne de manière excentrée. Toutefois, compte-tenu de la conception du chemin de sortie sélectif, il est nécessaire que le plateau et la couronne soient dans des plans différents, autre qu'horizontal, ce qui complique l'implantation au sol de la machine pour lui conserver une rigidité suffisante. De plus, il n'est nullement prévu que les pièces recirculées du fait de leur mauvaise orientation soient ramenées vers le plateau interne. De ce fait, si les réglages initiaux, notamment des inclinaisons, ne sont pas corrects, alors la couronne devient rapidement surchargée en objets.

L'exposé FR 2 310 164 divulgue un second exemple de ce type de machine dans laquelle le plateau interne inférieur tournant est garni sur son pourtour d'une bande amenée à passer par-dessus une rampe fixe pour lever les objets vers la couronne concentrique supérieure. La rigidité de la structure de la machine est ici possible du fait que le plateau interne est horizontal comme la couronne permettant d'assembler ces deux pièces respectivement à l'intérieur et l'extérieur d'un support cylindrique fixe. Par contre, du fait que le plateau interne est horizontal, il est nécessaire d'employer une bande de transport périphérique et les forces de frottement apparaissent entre cette bande mobile et la rampe fixe crée des pertes mécaniques inutiles et pouvant remettre en cause la régularité du transport des pièces.

L'exposé JP 61 127 514 divulgue un troisième exemple de ce type de machine dans laquelle le plateau interne est incliné et présente une forme conique pour que la ligne où s'effectue le basculement des objets sur la couronne soit horizontale. Par contre, la rigité de la structure de cette machine semble mauvaise du fait que le plateau est tenu à l'extrémité d'une longue tige tournée par un moteur inférieur, et le risque de mise en oscillation de ce plateau à vitesse plus élevée est très important.

L'exposé WO 85 02808 divulgue un quatrième exemple de ce type de machine dans laquelle une première carcasse externe soutient la couronne horizontale supérieure tournante, et une plaque interne indépendante supporte un moteur électrique oblique portant en extrémité d'arbre de sortie le plateau incliné. De par cette dualité de support, la position du plateau par rapport à la couronne peut être plus imprécise et moins constante dans le temps.

L'exposé US 4 429 808 divulgue un cinquième exemple de ce type de machine dans laquelle la couronne tournante externe est montée rigidement au moyen d'un palier sur la face externe d'un support tubulaire vertical fixe. Un arbre tournant passant à l'intérieur de ce support tubulaire, et prévu pour entraîner en rotation le plateau interne inférieur, se retrouve lui aussi vertical. Afin de maintenir le plateau incliné, il est alors prévu un disque de support sous-jacent incliné et fixé rigidement à l'extrémité supérieur du support tubulaire, ainsi qu'une liaison par cardan entre l'arbre et le plateau tournant. Manifestement, des pertes mécaniques par frottement apparaissent entre le plateau tournant et le disque de support.

Il est de plus à noter qu'aucune machine citée précédement ne permet de réglage de la hauteur du plateau interne par rapport à la couronne, ce qui réduit singulièremment le nombre d'application. En effet, il peut être désirable soit que le bord supérieur du plateau soit inférieur à la couronne, seul des pièces bien orientées pouvant alors mettre à profit la force centrifuge pour effectuer le saut, soit que ce bord soit supérieur à la couronne pour forcer aux pièces un premier basculement.

L'exposé FR 2 539 721 divulgue un sixième exemple de ce type de machine dans laquelle le support tubulaire, tenant l'arbre du plateau interne par deux paliers internes d'extrémité, est fixé obliquement à une table horizontale de la structure de la machine, donnant ainsi l'inclinaison définitive au plateau. L'extrémité supérieur externe de ce support tubulaire porte un palier horizontal étroit auquel est suspendu la couronne extérieure. La rigidité de cet agencement est considéré ici comme insuffisante car le moindre fléchissement de la table, de la liaison table/tube entraine une erreur de positionnement du plateau interne qui peut être augmenter par une oscillation de la couronne suspendue.

Il est par ailleurs prévu, dans cette machine, la possibilité de déplacer longitudinalement l'arbre du plateau à l'intérieur du support tubulaire en agissant sur une vis inférieure montant ou descendant le palier inférieur. Toutefois, la latitude de déplacement est très faible car limitée d'un côté par le nombre restreint de pas de filetage de la vis et d'un autre côté par la forme inférieure de la couronne tournante interférant avec le déplacement du plateau.

Le permier but de la présente invention est une machine trieuse d'objets comprenant un support cylindrique vertical solidaire d'une table fixe ; une poulie d'entraînement montée au moyen d'un palier sur la face extérieure latérale du support cylindrique, laquelle poulie supporte une couronne concentrique horizontale tournante et un arbre qui passe à l'intérieur du support cylindrique, qui est entraîné en rotation autour de son axe longitudinal et qui soutient en son extrémité supérieure un plateau interne rigide tournant incliné par rapport à la couronne concentrique, lequel plateau amène les objets les uns derrière les autres vers au moins un élément de sélection disposé au-dessus du plateau et/ou de la couronne de manière à recirculer vers le plateau interne les objets mal orientés, laquelle machine se révèle plus performante par une meilleure stabilité et rigidité permetant une diminution des pertes mécaniques donc de la puissance moteur nécessaire.

Un autre but de la présente invention est une machine du type mentionné ci-dessus qui soit de plus polyvalente pour un grand nombre d'objets différents, notamment grâce à des possibilités de réglage accrus du plateau interne par rapport à la couronne externe. Un autre but de la présente invention est une machine dont la conception des pièces constitutives permet leur réalisation et assemblage à coût raisonnable grâce à leur relative simplicité de forme.

Ces buts sont atteints, selon l'invention, du fait que le support cylindrique est surmonté d'une bride dont l'ouverture interne est oblique par rapport à la verticale pour maintenir en position inclinée un moteur d'entraînement et/ou un palier supportant coaxialement l'arbre du plateau. Avantageusement, le diamètre intérieur du support cylindrique est supérieur à trois fois le diamètre extérieur du moteur d'entraînement ou du palier supportant l'arbre du plateau. Avantageusement encore, le support cylindrique présente une section verticale interne conique.

Grâce à cette disposition, une même pièce stable et rigide : le support cylindrique, maintient d'une part la couronne sur toute sa face extérieure et d'autre part l'ensemble plateau-palier (ou moteur) en leur centre de gravité au travers de la bride fixée solidement sur la face supérieure. Les masses étant mieux équilibrées, les risques d'oscillations intempestives sont réduites.

Avantageusement, le corps du palier retenant l'arbre se présente sous la forme d'un cylindre sensiblement aussi long que la distance séparant le plateau interne de la poulie d'entraînement, l'arbre étant retenu dans l'axe du cylindre par au moins deux roulements disposés à chaque extrémité du cylindre. La position verticale du palier, donc du plateau par rapport à la couronne, peut ainsi être modifiée selon les besoins propres à l'objet à trier après desserrage momentané de la bride. Cette longueur du corps cylindrique du palier peut correspondre à celle nécessaire pour traverser le support cylindrique plus la longueur du débattement maximum voulu pour le réglage vertical.

Avantageusement, le corps du moteur d'entraînement prolongé par l'arbre est cylindrique allongé, la position verticale du moteur pouvant être modifiée après desserrage de la bride.

Utilement, la bride est choisie dans une série ayant chacune un orifice interne d'inclinaison différente permettant ainsi d'adapter l'inclinaison finale du plateau par rapport à la couronne en fonction de l'objet et de son mode de triage. la bride peut être installée sur une embase intercalaire horizontale, elle-même fixée au support cylindrique, la position de la bride sur l'embase étant réglable avant fixation. En effet, en levant ou descendant le plateau interne le long d'une ligne inclinée, on décale également son centre de rotation par rapport à celui de la couronne, décalage que l'on peut alors annuler grâce à l'embase intercalaire. Certaines applications spéciales peuvent aussi nécessiter un décalage volontaire. Le conduit interne du support cylindrique peut présenter une section verticale conique pour laisser un meilleur espace de débattement au corps cylindrique de l'arbre.

L'invention sera mieux comprise à l'étude d'un mode de réalisation pris à titre d'exemple nullement limitatif et décrit par les figures annexées dans lesquelles :

     – la figure 1 illustre une vue en coupe verticale d'un premier mode de réalisation de la machine, et

     – la figure 2 illustre une vue en coupe verticale d'une variante de réalisation.

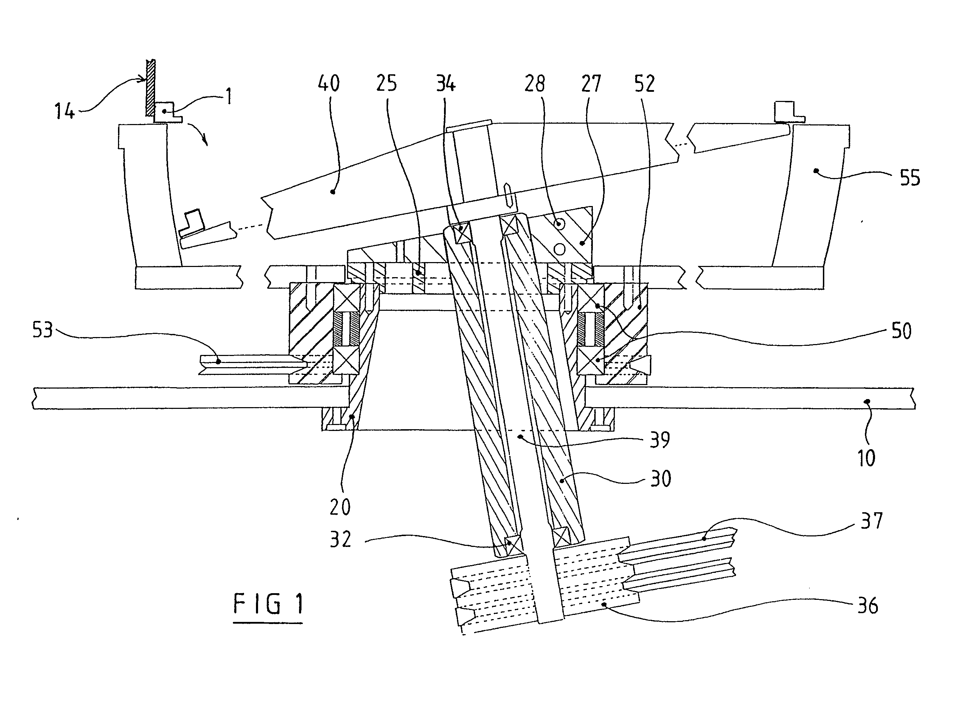

Telle qu'illustrée sur la figure 1, la base de la machine trieuse est constituée d'une table fixe 10 que traverse verticalement un support 20 sensiblement cylindrique. Une poulie horizontale 52 libre en rotation est installée au moyen d'un double palier 50 autour de la face externe cylindrique du support 20. Cette poulie est entraînée grâce à une courroie 53 reliée à un moteur non représenté. La face supérieure de cette poulie 52 supporte une pièce en forme de cuvette, dénommée dans la suite de l'exposé "couronne" 55, dont la bordure supérieure est plane. En d'autres termes, la surface plane de la bordure supérieure de la cuvette présente elle-même la forme d'une couronne.

Sur la face supérieure du support 20 est fixée, au moyen de plusieurs vis, une embase 25 c'est-à-dire un disque plan dont la périphérie de la face inférieure est rainurée pour correspondre au diamètre interne de la face supérieure du support 20 dans lequel il est engagé. Il est à remarquer que la face inférieure de cette embase 25 aide à maintenir en place les paliers 50 de la couronne. Cette embase 25 présente une ouverture transversale principale excentrée et plusieurs ouvertures transversales secondaires réparties autour de la première. Sur cette embase 25 est fixée une bride 27 au moyen de vis traversant simultanément cette bride et les orifices secondaires de l'embase 25. Ces derniers orifices étant plus larges que le diamètre des vis, il s'ensuit qu'il est possible d'ajuster dans une certaine plage la position horizontale de la bride 27 sur la face supérieure de la base 25.

La particularité de la bride 27 est que son orifice interne, se situant au-dessus de l'orifice principal excentré de la base 25, est oblique par rapport à la verticale. La surface supérieure de la bride 27 étant orthogonale à l'orifice interne, celle-ci se retrouve donc également inclinée par rapport à l'horizontale. Cette bride 27, qui se présente sous la forme d'un anneau coupé dont on peut plus ou moins rapprocher les deux extrémités au moyen de vis 28, tient en son milieu par serrage un cylindre 30 constituant le corps d'un palier. Ce palier comprend deux roulements, un inférieur 32 et un supérieur 34, tenant en position inclinée un arbre 39 libre en rotation autour de son axe longitudinal. Cet arbre 39 soutient en son extrémité supérieure un plateau 40 interne à la couronne 55. L'arbre 39 et le plateau 40 sont entraînés en rotation au moyen d'une poulie 36 solidaire de l'extrémité inférieure de l'arbre 39, laquelle poulie est elle-même entraînée par des courroies 37 venant d'un second moteur non représenté.

Le plateau interne 40 peut prendre la forme d'un disque. Toutefois et tel que représenté sur la figure 1, le plateau interne 40 est de préférence un cône convexe d'angle au sommet très large compris entre 155° et 179°. En fait, si l'angle complémentaire de l'angle au sommet du plateau 40 est égal à l'angle d'inclinaison de l'arbre 39, alors la ligne supérieure de la surface conique se trouve être à l'horizontale, tel qu'illustré sur la partie droite de la figure 1.

Comme on peut aisément le comprendre, l'angle d'inclinaison du plateau est uniquement imposé par l'orifice interne de la bride 27, l'orifice central de l'embase 25 et la surface interne du support 20 ne venant normalement pas en contact avec le corps cylindrique 30. Bien évidemment, l'épaisseur verticale de la bride oblique 27, c'est-à-dire sa hauteur, ainsi que l'épaisseur transversale du cylindre 30 constituant le corps de palier doivent être suffisantes pour éviter tout fléchissement sur l'arbre 39 pouvant être induit par l'action des courroies 37 sur les poulies 36. Ces calculs dimensionnels sont considérés comme connus de l'homme du métier.

Comme on peut également le constater sur cette figure, le support 20 présente un diamètre assez large par rapport au cylindre 30 qui le traverse afin d'autoriser plusieurs angles d'inclinaison selon la bride sélectionnée. Typiquement, le diamètre interne de ce support 20 est compris entre deux et trois fois le diamètre du cylindre 30. En alternative, et tel qu'illustré, ce support a une surface interne conique avec la base la plus large orienté vers le bas, ce qui permet de réduire alors le diamètre dans la partie supérieure à deux fois le diamètre du cylindre 30.

Lors de l'installation de la machine trieuse, on règle d'abord la hauteur et l'inclinaison du plateau 40 par rapport à la couronne 55, et plus particulièrement la hauteur du bord supérieur du plateau 40 par rapport à la surface supérieure de la couronne, et ce en fonction de la pièce et de son mode de triage. Le réglage de l'inclinaison du plateau permet alors de conserver le bord inférieur de celui-ci le plus bas possible au fond de la cuvette de la couronne 55. Ce bord supérieur est dans la majorité des cas mis à niveau avec la couronne 55 tel qu'illustré sur la partie droite de la figure, et les éléments de sélection 14 sont alors plutôt disposés au-dessus de cette couronne. Dans d'autres cas, ce bord est à un niveau au moins supérieur à celui de la couronne, notamment lorsque la sélection s'effectue au-dessus de ce bord de plateau, les pièces bien orientées étant alors basculées par les éléments de sélection 14 sur la couronne.

Le réglage de l'inclinaison s'effectue en remplaçant la bride 27 par une autre choisie dans une série dont chacune a un orifice interne incliné avec un angle différent. Si ces réglages deviennent fréquents, on peut envisager une bride plus complexe dont l'orifice interne traverse une boule également fendue verticalement d'un côté pour toujours permettre le serrage, laquelle boule est enchâssée dans la bride dont l'orifice interne est alors sphérique. Le réglage en hauteur s'effectue en déplaçant plus ou moins haut le cylindre 30 à l'intérieur de la bride 27. Si nécessaire, la position de la bride 27 dans le plan horizontal supérieur de l'embase 25 est également modifiée.

Les objets à trier sont initialement mis en vrac sur le dessus du plateau interne et de préférence en sa partie inférieure. De par la rotation du plateau 40, ces objets sont dirigés vers sa périphérie puis, lorqu'ils atteignent le bord supérieur sont transférés par effet centrifuge sur la couronne 55. Au-dessus de la couronne sont judicieusement disposés'un ou plusieurs éléments de sélection 14, de telle sorte qu'une pièce mal orientée se retrouve en déséquilibre au bord interne de la couronne 55 et retombe à l'intérieur sur le plateau interne 40 tel que représenté sur la partie gauche de la figure. Seules les pièces ayant une bonne orientation, donc passant sans encombre toutes les chicanes, sont par la suite récupérées par une plaque verticale de dégagement.

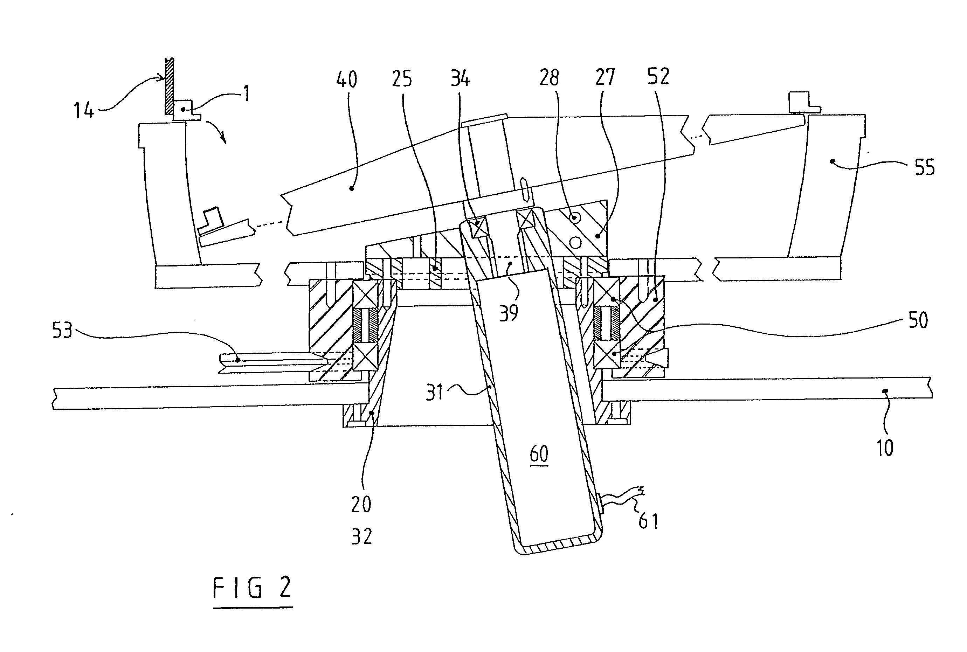

La variante de réalisation illustrée sur la figure 2 diffère en ce que le cylindre 30, le palier 32 et les poulies 36 sont remplacés par un moteur électrique 60 de forme allongée et tournant directement l'arbre 39 du plateau 40. Cette variante est plutôt prévue pour des machines de petites dimensions dans lesquelles le plateau 20 présente une moindre inertie. Comme précédemment, il suffit de desserrer la bride 27 pour repositionner plus ou moins haut le moteur 60 donc le plateau.

Comme on a pu le constater à la lecture de cet exposé, toutes les forces de frottement potentielles dues à des pièces mobiles sont atténuées à la fois par des roulements ou paliers et par une rigidité suffisante sans impliquer de poids superflu, ce qui diminue l'énergie nécessaire au bon fonctionnement de la machine. La possibilité de réglage de la position du plateau dans une large plage permet une gamme de sélection de pièces plus variées. De nombreuses améliorations peuvent être apportées à cette machine dans le cadre de cette invention.

## Revendications

1. Machine trieuse d'objets comprenant un support cylindrique vertical (20) solidaire d'une table fixe (10) ; une poulie d'entraînement (52) montée au moyen d'un palier (50) sur la face extérieure latérale du support cylindrique (20), laquelle poulie (52) supporte une couronne concentrique horizontale tournante (55) ; un arbre (39) qui passe à l'intérieur du support cylindrique (20), qui est entraîné en rotation autour de son axe longitudinal et qui soutient en son extrémité supérieure un plateau interne rigide tournant (40) incliné par rapport à la couronne concentrique (55), lequel plateau amène les objets (1) les uns derrière les autres vers au moins un élément de sélection (14) disposé au-dessus du plateau et/ou de la couronne de manière à recirculer vers le plateau interne (40) les objets mal orientés, caractérisée en ce que le support cylindrique (20) est surmonté d'une bride (27) dont l'ouverture interne est oblique par rapport à la verticale pour maintenir en position inclinée un moteur d'entraînement (60) et/ou un palier (30,32,34) supportant coaxialement l'arbre (39) du plateau (40).

2. Machine trieuse d'objets selon la revendication 1, caractérisée en ce que le diamètre intérieur du support cylindrique (20) est supérieur à trois fois le diamètre extérieur du moteur d'entraînement (60) ou du palier (30) supportant l'arbre du plateau.

3. Machine trieuse d'objets selon la revendication 1 ou 2, caractérisée en ce que le corps du palier retenant l'arbre (39) est un cylindre (30) sensiblement aussi long que la distance séparant le plateau interne (40) de la poulie d'entraînement (36), l'arbre (39) étant retenu dans l'axe du cylindre par au moins deux roulements (32,34) disposés à chaque extrémité du cylindre, la position verticale du palier pouvant être modifiée après desserrage de la bride (27).

4. Machine trieuse d'objets selon la revendication 1 ou 2, caractérisée en ce que le corps du moteur d'entraînement (60) prolongé par l'arbre (39) est cylindrique allongé, la position verticale du moteur pouvant être modifiée après desserrage de la bride (27).

5. Machine trieuse d'objets selon la revendication 1 ou 2, caractérisée en ce que la bride (27) est installée sur une embase intercalaire horizontale (25) elle même fixée au support cylindrique (20), la position de la bride (27) sur l'embase (25) étant réglable dans le plan horizontal avant fixation.

6. Machine trieuse d'objets selon la revendication 5, caractérisée en ce que la bride (27) est choisie dans une série ayant chacune un orifice interne d'inclinaison différente.

7. Machine trieuse d'objets selon l'une des revendications précédentes, caractérisée en ce que le support cylindrique (20) présente une section verticale interne conique.

FIG 1

EP 0 462 911 A1

FIG 2

EP 0 462 911 A1

Office européen
des brevets

**RAPPORT DE RECHERCHE EUROPEENNE**

Numero de la demande

EP    91 42 0204

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,X | FR-A-2 539 721 (FMC CORPORATION)<br>* le document en entier * | 1,3,5,8 | B65G47/14 |
| D,A | US-A-4 429 808 (MYRON L. DOTY)<br>* le document en entier * | 1,3,5 | |
| D,A | PATENT ABSTRACTS OF JAPAN<br>vol. 10, no. 320 (M-530)(2376) 30 Octobre 1986<br>& JP-A-61 127 514 (HITACHI ) 14 Juin 1986<br>* le document en entier * | 1 | |

DOMAINES TECHNIQUES RECHERCHES (Int. Cl.5)

B65G

Le présent rapport a été établi pour toutes les revendications

| Lieu de la recherche | Date d'achèvement de la recherche | Examinateur |
|---|---|---|
| LA HAYE | 11 SEPTEMBRE 1991 | OSTYN T.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

9